Europäisches Patentamt

European Patent Office

Office européen des brevets

(19)

(11) **EP 1 533 228 A1**

(12) **DEMANDE DE BREVET EUROPEEN**

(43) Date de publication:
**25.05.2005 Bulletin 2005/21**

(51) Int Cl.$^7$: **B64D 15/20**

(21) Numéro de dépôt: **04292717.8**

(22) Date de dépôt: **17.11.2004**

(84) Etats contractants désignés:
**AT BE BG CH CY CZ DE DK EE ES FI FR GB GR
HU IE IS IT LI LU MC NL PL PT RO SE SI SK TR**
Etats d'extension désignés:
**AL HR LT LV MK YU**

(30) Priorité: **18.11.2003 FR 0313470**

(71) Demandeur: **Auxitrol S.A.**
**18000 Bourges (FR)**

(72) Inventeurs:
• **Barre, Cyril**
**36100 Issoudun (FR)**
• **Lapeyronnie, David**
**18340 Levet (FR)**
• **Salaun, Gurvan**
**18000 Bourges (FR)**

(74) Mandataire: **Callon de Lamarck, Jean-Robert et al**
**Cabinet Régimbeau
20, rue de Chazelles
75847 Paris cedex 17 (FR)**

(54) **Ensemble de détection de givre destiné à être monté sur aéronef**

(57) Ensemble de détection de givre (100) destiné à être monté sur aéronef, comprenant un doigt vibrant (110) et un mât (120), le doigt vibrant (110) s'étendant dans l'air à partir du mât (120) et étant apte à être mis en vibration par des moyens de mise en vibration à une fréquence de résonance sensible à un dépôt de givre sur sa surface, caractérisé en ce qu'il comprend un système de refroidissement apte à refroidir au moins une partie de l'ensemble de détection (100).

FIG. 8

EP 1 533 228 A1

## Description

La présente invention a trait à un ensemble de détection de givre monté sur un aéronef, tel qu'un avion, qui permette de détecter une accrétion de givre sur des surfaces de l'aéronef.

La détection de givre est habituellement utilisée dans l'aviation, au cours du vol, pour indiquer la présence de givre dans l'air environnant l'appareil.

La fiabilité et la précision de cette détection sont très importantes puisque le givre peut détériorer les propriétés de certaines parties d'un aéronef, telles que des propriétés aérodynamiques de parties d'ailes ou d'admissions de moteur, et augmenter la masse de l'aéronef. Ceci peut alors entraîner la perte de portance et de maniabilité de l'aéronef.

L'ensemble de détection, comportant une partie intrusive immergée dans l'écoulement d'air environnant l'aéronef, est typiquement positionné aux emplacements de l'aéronef particulièrement soumis aux conditions givrantes, tels que le nez de l'appareil ou les ailes, afin de détecter les premiers signes d'apparition de givre.

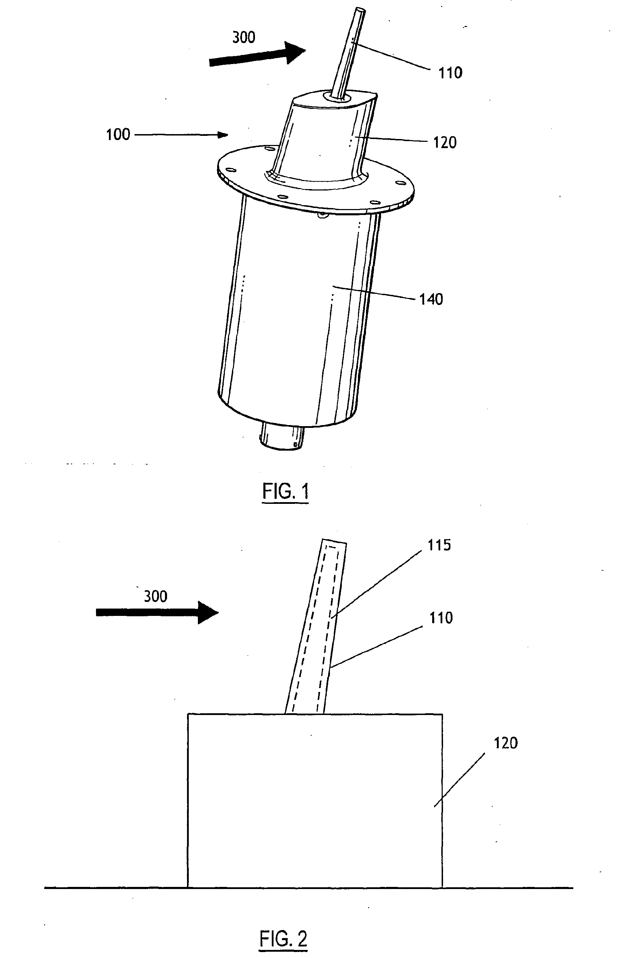

En référence à la figure 1, un ensemble de détection 100 connu comprend :

- un mât 120 ; et
- un doigt 110 de forme allongée, monté sur le mât 120, s'étendant dans l'air environnant.

Le doigt 110 constitue un élément sensible oscillant, typiquement excité via un dispositif magnétostrictif ou piézo-électrique, ayant une fréquence propre d'oscillation sensible à un dépôt de givre, de sorte que, lorsque du givre s'accumule sur le doigt 110, la masse du doigt 110 varie et la fréquence d'oscillation change alors jusqu'à être en deçà d'un seuil de détection déterminé. On provoque ainsi le déclenchement, d'un signal de détection de givre.

Optionnellement, ce type d'ensemble de détection 100 comprend en outre un système de réchauffage destiné à dégivrer temporairement le doigt 110, avant de réaliser une nouvelle détection de givre. Ainsi, l'ensemble de détection 100 est mis en oeuvre selon des cycles successifs détection / dégivrage.

Le système de réchauffage classiquement utilisé est à effet Joule.

Ce type d'ensemble de détection 100 présente toutefois un inconvénient majeur pour les détections de givre au voisinage du début des conditions givrantes (température statique de l'air environnant proche de 0°C).En effet, l'aéronef, du fait de son déplacement dans l'air, génère dans son proche environnement une modification du champ aérodynamique (pression locale et vitesse) L'ensemble de détection 100 est aussi soumis à cette modification des caractéristiques aérodynamiques de l'écoulement d'air. Ainsi, la température d'équilibre de l'ensemble de détection 100, sera inférieure à la température totale de l'écoulement (température incluant l'influence de la vitesse) et sera supérieure à la température statique du milieu dans lequel évolue l'aéronef, appelée aussi OAT pour "Outside Air Temperature". Plus la vitesse de l'aéronef sera élevée, plus cette température d'équilibre sera supérieure à l'OAT.

Aussi, lorsque cette OAT est égale ou légèrement inférieure à la température de givrage, l'ensemble de détection de l'art antérieur ne détectera pas de givre même s'il est soumis à des conditions givrantes.

Une diminution de la vitesse de l'aéronef approchant la température d'équilibre de l'ensemble de détection 100 de la température de givrage, provoquera alors une apparition de givre sur l'élément sensible qui aurait pu être détectée auparavant.

Il est bien connu de l'homme de l'art que le fait d'incliner un doigt 110 selon un angle et une direction d'inclinaison convenablement choisis peut créer sur une partie du doigt 110 une diminution de la température de sa paroi. Un tel doigt 110 incliné pourra par exemple être retrouvé sur la figure 3 du document US 4,333,004.

Cependant ce système ne permet pas une forte diminution de la température d'équilibre et ne permet pas de contrôle sur la valeur de cette diminution de température obtenue.

Le document US 4 570 881 enseigne un détecteur de givre 130, représenté sur la figure 18, comprenant une membrane flexible 132 sur laquelle est fixé un transducteur piézoélectrique 131 qui, sous excitation électrique, est apte à mettre en vibration la membrane 132 à une fréquence de résonance, la fréquence de vibration de la membrane variant alors en fonction de la raideur modifiée par l'accrétion de givre sur la membrane. Ce détecteur de givre 130 comprend en outre un système de refroidissement et de réchauffage 135 à effet Peltier, le refroidissement et le réchauffage s'inscrivant dans des cycles de givrage/dégivrage de la membrane.

L'élément sensible du détecteur de givre 130 est ainsi caractérisé par une température d'équilibre plus faible.

Cependant, ce détecteur de givre 130 présente une faible surface de détection, et la détection de givre peut donc s'avérer ne pas être suffisamment fiable.

Par ailleurs, il n'expose qu'une seule face de détection, et ne s'étend pas dans les trois dimensions, en éloignement de l'aéronef (tel que le fait ledit doigt 110), ce qui peut nuire à la qualité du résultat obtenu.

Enfin, l'utilisation de l'effet Peltier implique une puissance de dégivrage du même ordre de grandeur que la puissance de refroidissement (de l'ordre de quelques Watts). Or, la puissance nécessaire à un dégivrage rapide de la surface de l'élément sensible est beaucoup plus importante (quelques dizaines de Watts). Ainsi, le système Peltier est peu adapté au besoin de dégivrage rapide facilitant une nouvelle détection.

Un premier objectif de la présente invention est de réaliser un ensemble de détection monté sur un aéronef qui permette de détecter du givre pour des OAT proches de la température de début de givrage.

Un deuxième objectif de la présente invention est de réaliser cette détection de manière précise, fiable et ajustable.

Un troisième objectif de la présente invention est de réaliser cette détection quelle que soit la taille des gouttes d'eau.

Un quatrième objectif de l'invention est de mettre en oeuvre des cycles successifs givrage/dégivrage au niveau de l'ensemble de détection, de sorte que le dégivrage soit réalisé plus rapidement.

A cet effet, l'invention propose selon un premier aspect un ensemble de détection de givre destiné à être monté sur aéronef, comprenant un doigt vibrant et un mât, le doigt vibrant s'étendant dans l'air à partir du mât et étant apte à être mis en vibration par des moyens de mise en vibration à une fréquence de résonance sensible à un dépôt de givre sur sa surface, caractérisé en ce qu'il comprend un système de refroidissement apte à refroidir au moins une partie de l'ensemble de détection.

Un tel ensemble de détection de givre comprend avantageusement au moins une ou plusieurs des caractéristiques suivantes :

- le doigt inclut au moins une partie dudit système de refroidissement ;
- le doigt comporte au moins deux ouvertures reliées par au moins un canal traversant, de sorte à y créer localement un écoulement d'air refroidissant la surface du doigt, constituant ainsi ledit système de refroidissement ;
- l'ensemble de détection comprend en outre un dispositif à membrane flexible monté sur le mât, la membrane vibrante étant apte à être mise en vibration par des moyens de mise en vibration à une fréquence de résonance sensible à un dépôt de givre sur sa surface et étant refroidie par au moins une partie dudit système de refroidissement ;
- la membrane est située sur une surface d'attaque du mât, c'est à dire une surface du mât qui fait face au flux d'air ;
- la surface d'attaque du mât est biseautée, la surface du biseau ayant un angle déterminé avec la direction du flux d'air ;
- ladite surface du biseau est concave ;
- le dispositif à membrane est situé sur un flanc du mât, c'est à dire sur une surface latérale par rapport à une surface du mât faisant face au flux d'air ;
- le système de refroidissement comprend un système de pompe à chaleur compression/détente ;
- le système de refroidissement comprend un système à effet Peltier ;
- l'ensemble de détection comprend en outre un capteur de température destiné à mesurer la température du doigt ;
- l'ensemble de détection comprend en outre un capteur de température destiné à mesurer la température de la membrane vibrante ;
- l'ensemble de détection comporte au moins un capteur de température apte à mesurer la température représentative de la température totale ou statique de l'air environnant, relié à des moyens de contrôle du refroidissement ;
- l'ensemble de détection de givre comprend en outre au moins un capteur de température apte à mesurer une température représentative de la température totale ou statique de l'air environnant, relié à des moyens pour contrôler qui de la membrane ou du doigt fournira les données de détection de givre à des moyens de traitement, selon les données de température fournies par au moins le capteur ;
- l'ensemble de détection de givre comprend un capteur de température apte à mesurer la température d'équilibre du doigt et/ou la température représentative de la température de la membrane, celle(s)-ci étant asservie(s) par rapport à la température totale ou statique de l'air environnant grâce au système de refroidissement adapté,
- pour une température mesurée par au moins le capteur inférieure à environ -5°C, ce sont les données provenant du doigt qui sont fournies aux moyens de traitement, et au-dessus de -5°C, ce sont les données provenant de la membrane qui fournies aux moyens de traitement ;
- l'ensemble de détection de givre comprend en outre un système de dégivrage ;
- les fonctions de dégivrage et de refroidissement sont assurées par le même dispositif.

D'autres caractéristiques et avantages de l'invention ressortiront encore de la description qui suit, laquelle est purement illustrative et non limitative et doit être lue en regard des dessins annexés sur lesquels :

- La figure 1 illustre un ensemble de détection de givre vu en perspective.
- La figure 2 illustre un premier ensemble de détection selon l'invention, schématisé selon une vue en coupe transversale, comportant un premier type de système de refroidissement.
- La figure 3 illustre un premier ensemble de détection selon l'invention, schématisé selon une vue latérale, comportant un deuxième type de système de refroidissement.
- La figure 4 illustre un premier ensemble de détection selon l'invention, schématisé selon une vue latérale, comportant une variante du deuxième type de système de refroidissement.
- La figure 5 illustre le premier ensemble de détection illustré sur la figure 3, vu en coupe longitudinale.
- La figure 6 illustre le premier ensemble de détection selon l'invention, schématisé selon une vue en coupe transversale du doigt vibrant qu'il comporte, le doigt vibrant comportant le deuxième système de refroidissement.

- La figure 7 illustre le premier ensemble de détection selon l'invention, schématisé selon une vue en coupe transversale du doigt vibrant qu'il comporte, le doigt vibrant comportant une variante du deuxième système de refroidissement.
- La figure 8 illustre un deuxième ensemble de détection de givre selon l'invention, vu en perspective, qui comprend une membrane vibrante.
- La figure 9 représente un détail du deuxième ensemble de détection représenté sur la figure 8, vu en coupe, au niveau de la membrane, dans une première configuration.
- La figure 10 représente un détail de l'ensemble de détection représenté sur la figure 8, vu en coupe, au niveau de la membrane, dans une deuxième configuration.
- La figure 11 comporte trois graphes représentatifs du fonctionnement d'une membrane vibrante lors d'une accrétion de givre donnant l'évolution dans le temps de la fréquence de vibration, du réchauffage et du signal de détection.
- Les figures 12 à 17 représentent différentes configurations d'ensembles de détection comportant une membrane vibrante selon l'invention, vues en perspective.
- La figure 18 représente un détecteur de givre à membrane vibrante, vu en coupe transversale comportant un système Peltier.
- La figure 19 représente le détecteur de givre à membrane vibrante représenté sur la figure 18, vu côté membrane.

En référence à la figure 1, un ensemble de détection de givre 100 selon l'invention comprend :

- un mât 120 ;
- un doigt 110 de forme allongée s'étendant dans l'air environnant à partir du mât auquel il est solidaire de manière généralement transversale par rapport au flux d'air ;
- un système de refroidissement d'au moins une partie de l'ensemble de détection (non représenté sur la figure 1).

Le mât 120 peut être de la forme d'un profil d'aile symétrique ou d'une ellipse.
Une bride de fixation 140 est habituellement prévue pour maintenir l'ensemble de détection 100 et se fixer sur une surface de fixation extérieure à l'aéronef.
Un boîtier (non représenté) est fixé à la bride 140, s'étendant à l'intérieur de l'aéronef à travers la surface de fixation, pour contenir et protéger les liaisons et circuits électriques nécessaires au fonctionnement de l'ensemble de détection 100. Ce boîtier comprend en particulier les différents matériels électriques, cartes et composants électroniques utilisés pour fournir et contrôler l'excitation fréquentielle du ou des détecteur(s) de l'ensemble de détection 100, pour éventuellement réaliser des mesures, pour alimenter en énergie, pour blinder électromagnétiquement, pour connecter...

Un tel ensemble de détection de givre 100 signale la présence de givre dans le flux d'air d'immersion.
Tel que déjà expliqué, le principe de détection repose sur un oscillateur mécanique utilisé sous la forme du doigt 110.
La fréquence de résonance du doigt 110, créée par une excitation électrique, est choisie pour rester insensible à la vitesse de l'écoulement d'air, aux particules (sable, poussières,...), à la pluie et aux contaminants (hydrocarbures,...). Cette fréquence d'oscillation est choisie pour être au-dessus d'environ 20kHz, de sorte à rester insensible au spectre de vibration de l'aéronef tout en possédant une énergie suffisante permettant de signaler la présence de givre à sa surface.
La fréquence d'oscillation du doigt 110 dépend de la masse de givre accumulée sur la surface du doigt 110 selon la relation :

$$f = 2\pi \sqrt{\frac{k}{m}} \qquad (1)$$

la masse de givre dépendant du coefficient de captation de l'élément sensible et du LWC local (de l'anglais « Liquid Water Content ») de l'écoulement d'air, lui-même fonction notamment de la vitesse des gouttes d'eau et de la géométrie de l'aéronef.
C'est la décroissance de la fréquence d'oscillation du doigt 110 qui, si elle décroît en deçà d'un seuil critique déterminé, déclenchera donc un signal de détection de givre.
Le doigt 110 doit s'étendre suffisamment dans l'air environnant pour améliorer l'efficacité de la captation de givre et réaliser la mesure dans une zone moins soumise aux perturbations aérodynamiques liées à la présence de l'aéronef.
Il doit tout d'abord avoir une longueur suffisante.
Typiquement l'élément sensible 110 exposé à l'écoulement mesure entre environ 45 et environ 65 millimètres.
Son extension à partir du mât 120 se fera donc de façon sensiblement perpendiculaire.
Cependant, dans un cas de figure particulier et quelquefois préféré, le doigt 110 s'étend dans une direction fonction de la direction de l'écoulement d'air, selon un angle déterminé.
Cet angle peut se situer par exemple entre 0° et environ 40° par rapport à l'aval de l'écoulement d'air.
Cette inclinaison du doigt 110 a pour but principal de créer une zone de sous et de sur-pression au niveau de la surface du doigt 110, afin d'y:

- diminuer la température de paroi du doigt et donc améliorer la détection de givre autour de la température de givrage, et
- faciliter l'élimination de givre durant un dégivrage (dans le cas où l'ensemble de détection 100 est muni d'un système de dégivrage) en autorisant un glissement du givre sur la surface du doigt 110.

D'autre part, ce doigt 110 peut être de forme parallélépipédique ou d'une forme à section évoluant d'une grande section au niveau du mât à une petite section au niveau de son extrémité.

Une forme à section évolutive, telle un cône ou une superposition de cylindres ayant des bases de plus en plue petites, peut être préférée à la forme parallélépipédique afin d'homogénéiser la détection de givre sur toute la surface du doigt 110, tel que préconisé dans le document EP 03290582.0 (référence de dépôt).

En effet, les modifications des caractéristiques de l'air environnant l'aéronef (dues à une modification du champ aérodynamique autour de l'aéronef causé par son déplacement rapide dans l'air) discutées plus haut jouent, en outre de la température, sur le profil de concentration de gouttelettes d'eau en fonction de la distance à la paroi de l'aéronef qui est différent selon la taille des gouttes d'eau. Suivant la localisation, on pourra trouver par exemple davantage de grosses gouttelettes d'eau (d'un diamètre par exemple de l'ordre de 50 $\mu$m) à proximité de la surface de l'aéronef que de petites gouttelettes d'eau (d'un diamètre par exemple de l'ordre de 20 $\mu$m), cette tendance s'inversant au fur et à mesure qu'on s'éloigne de la surface. Les distances sur lesquelles cette inhomogénéité en taille de gouttelettes d'eau apparaît peuvent aller jusqu'à plusieurs centimètres.

Ainsi, le document EP 03290582.0 (référence de dépôt) recommande d'utiliser un doigt 110 conique pour optimiser une détection homogène de gouttelettes d'eau, palliant les inhomogénéités de concentrations et de tailles des gouttelettes d'eau présentes dans les différents écoulements d'air en périphérie de l'aéronef.

Le doigt 110 est avantageusement excité mécaniquement par une céramique piézoélectrique commandée en tension, sur une plage fréquentielle contenant sa fréquence de résonance mécanique sensible à un dépôt de givre.

Une seconde céramique piézoélectrique génère une tension fonction de la fréquence de résonance du doigt 110, cetteinformation électrique constituant l'information de détection.

Dans un mode de réalisation, la fréquence de résonance exploitée peut être située entre 20 et 30 kHz.

Pour le doigt 110, le dépôt de givre correspond à une baisse de sa fréquence propre. En effet, le dépôt de givre provoque une augmentation de la masse du doigt.

Afin d'améliorer la capacité de détection de givre de l'ensemble de détection 100 pour des OAT proches de la température de givrage (autour de 0°C), l'ensemble de détection 100 inclut un système de refroidissement d'au moins une de ses parties.

Premier ensemble de détection de givre 100 selon l'invention

Dans une première configuration selon l'invention, le système de refroidissement de l'ensemble de détection 100 est situé sous la surface extérieure du doigt 110. Ainsi, sa température $T_{doigt}$ est inférieure à celle de l'air $T_{air}$ s'écoulant autour de l'ensemble de détection 100 ce qui permet, en présence de gouttelettes d'eau, de provoquer l'accrétion de givre à la surface du doigt 110 au moment où le givre apparaît sur les parties les plus sensibles de l'aéronef.

La détection de givre est alors accélérée par ce moyen de refroidissement.

Le système de refroidissement du doigt 110 peut être de différentes natures.

De façon non limitative, il peut s'appuyer :

(1) sur le concept de l'effet Peltier ;
(2) sur le concept d'un fluide refroidissant circulant dans la paroi du doigt 110 ;
(3) sur le principe d'une pompe à chaleur utilisant un gaz comprimé et détendu circulant dans la paroi du doigt.

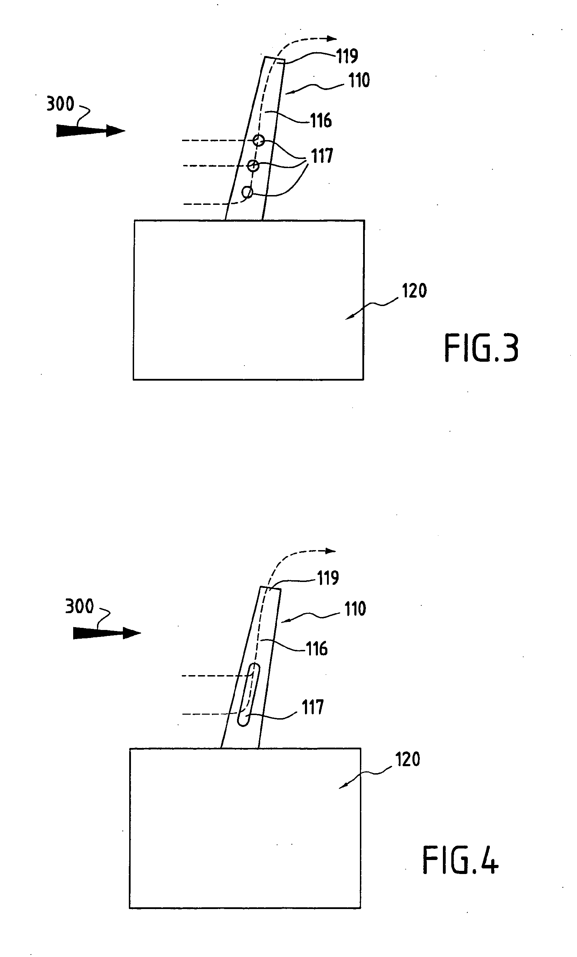

Concernant le point (2), et en référence aux figures 3 à 7, la circulation du fluide refroidissant peut être réalisée dans un ensemble de circulation de fluide, interne au doigt 110, comprenant au moins une ouverture d'entrée d'air 117 de l'extérieur, au moins une ouverture de sortie d'air 118 vers l'extérieur, et au moins un canal de circulation d'air 116 reliant les ou l'ouverture(s) d'entrée d'air 117 et les ou l'ouverture(s) de sortie d'air 119.

L'écoulement d'air qui est orienté selon la direction 300, atteint le doigt 110 (au niveau de sa paroi 112, encore appelée « bord d'attaque », qui est soumise la première à une accrétion potentielle de givre et contourne ce dernier. Du fait de la différence de pression entre l'entrée 117 et la sortie 119 du canal interne, une partie vient alors s'engouffrer par les ouvertures d'entrée 117, pour ressortir par les ou l'ouverture(s) de sortie 119 via le canal de circulation d'air 116.

L'air entrant à une température statique locale inférieure à la température du bord d'attaque du doigt, circule dans le doigt 110 et refroidit alors ce dernier.

Ce phénomène peut s'expliquer par la diminution de la capacité du doigt 110 à récupérer la température totale de l'air ($Tt_{air}$) environnant (qui est, rappelons-le, plus importante que la température statique de l'air environnant ou OAT).

Ainsi, la température de paroi Tp du doigt 110 (ou d'un corps en général) baigné dans un écoulement d'air, satisfait à la double inégalité suivante :

$$OAT \leq Tp \leq Tt_{air}$$

La capacité du doigt 110 à récupérer la température totale de l'air $Tt_{air}$ se mesure par son coefficient de récupération β, défini par la formule suivante :

$$Tp = OAT \left(1 + \beta \frac{\gamma - 1}{2} M^2\right)$$

M le nombre de Mach de l'aéronef,

OAT, température statique du milieu où évolue l'aéronef,

γ vaut 1,4 pour l'air.

Ainsi, lorsque le coefficient β diminue (β étant compris entre 0 et 1), à OAT et à M fixés, la température de paroi Tp du doigt 110 diminue.

La présence des ouvertures 117 et 119 à la surface du doigt 110 diminue son coefficient de récupération β, ce qui provoque une diminution de la température de surface exposée au flux d'air Tp.

La température de surface Tp du doigt 110 se rapproche alors de l'OAT.

Tp peut ainsi être de plusieurs degrés inférieure à $Tt_{air}$ selon la vitesse de l'écoulement.

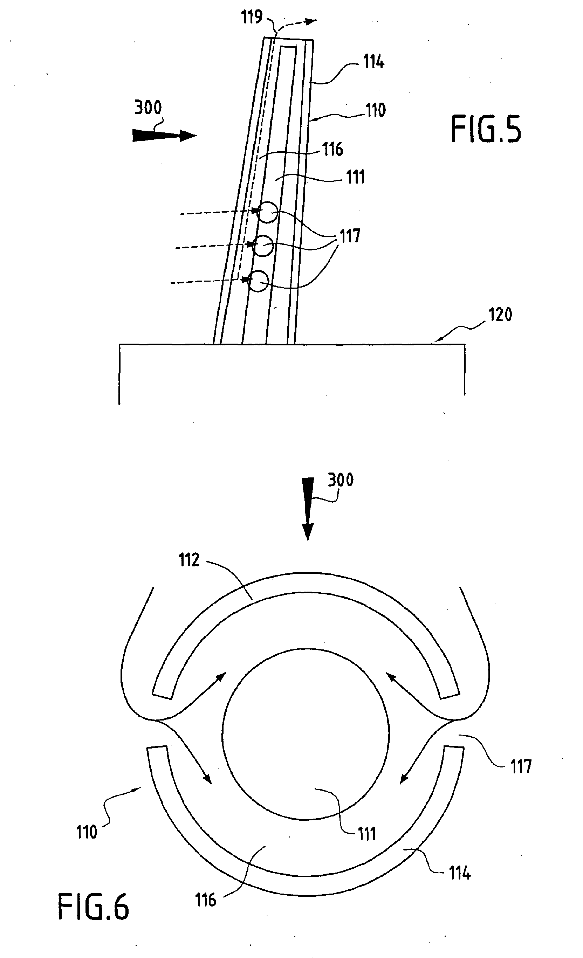

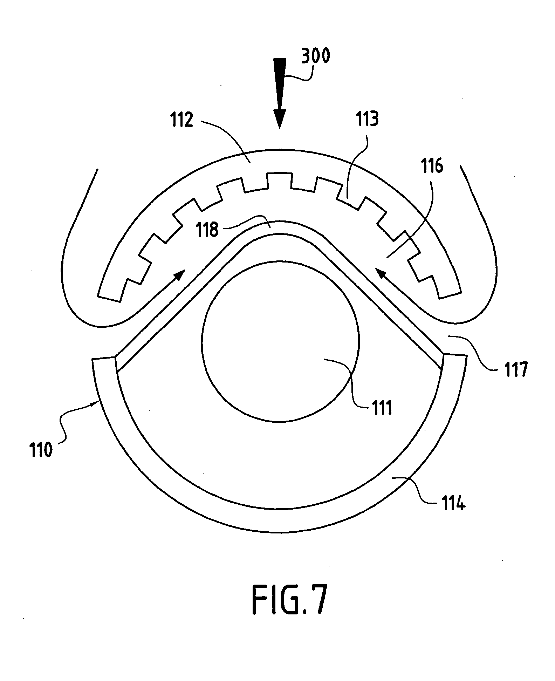

Ces ouvertures d'entrée 117 et de sortie 119 peuvent se situer n'importe où sur la surface du doigt 110 à l'exception de la surface du bord d'attaque de l'air 112 (voir figures 6 et 7), lieu de l'accrétion de givre.

Les ouvertures d'entrée 117 du doigt 110 représentées sur les figures 3 à 5 sont à la moitié de la corde dans la direction de l'écoulement d'air 300.

En fonction du profil du doigt 110, la position de ces ouvertures d'entrée 117 sur le profil du doigt 110 peut en particulier être choisie afin de diminuer au maximum le coefficient de récupération β et afin d'éviter l'entrée des gouttelettes d'eau à l'intérieur du doigt 110.

Les ouvertures d'entrée d'air 117 peuvent être appairées à la surface du doigt 110 à la même hauteur ou à des hauteurs décalées selon le côté du doigt 110. Elles peuvent en particulier se situer longitudinalement à l'axe principal du doigt 110. Elles peuvent être symétriques par rapport à ce même axe, afin notamment d'égaliser le flux d'air dans le doigt 110.

En référence à la figure 3, le doigt 110 présente plusieurs petites ouvertures d'entrée d'air 117 de formes sensiblement circulaires.

En référence à la figure 4, le doigt 110 présente une ouverture d'entrée d'air 117 sur une face latérale, large, et de la forme d'une rainure.

Les ou l'ouverture(s) d'entrée d'air 117 ou de sortie d'air 119 peuvent cependant être de toutes autres formes (carrées, triangulaires, rectangulaires, elliptiques, etc...) et de toutes autres tailles.

Les ou l'ouverture(s) de sortie d'air 119 peu(ven)t être située(s) à l'extrémité du doigt 110, comme il est montré dans les figures 3 à 5.

Les dimensions des ouvertures 117 et 119 sont choisies de sorte à obtenir un débit suffisant à l'intérieur du doigt 110. L'écoulement ne se fait dans le doigt 110 que de la partie inférieure (côté mât 120) vers la partie supérieure (extrémité 119 du doigt 110) grâce à un effet de dépression au sommet du doigt 110, dû principalement à l'écoulement à vitesse élevée à ce niveau.

Le canal de circulation d'air 116 peut revêtir toute forme possible qui permette de relier les ou l'ouverture(s) d'entrée 117 à les ou l'ouverture(s) de sortie 119.

Il peut par exemple être de forme cylindrique, conique tronqué s'étendant longitudinalement à l'axe du doigt 110, comme représenté sur la figure 5.

Il peut aussi représenter un espace compris entre les parois externes 114 du doigt 110 et un second volume 111 interne au doigt 110 s'étendant autour de l'axe du doigt 110.

Ce second volume 111, tel que par exemple celui représenté sur les figures 5, 6 et 7, de forme cylindrique ou conique tronquée peut par exemple s'étendre le long de l'axe du doigt 110.

Dans une configuration optionnelle mais avantageuse de l'invention, ce volume plein 111 comprend un système de dégivrage.

Il est alors souhaitable que ce système de réchauffage 111 ne soit pas en contact avec la surface interne 114 du doigt 110 pour permettre un écoulement d'air dans le doigt à travers ledit canal 116.

De manière plus générale, le doigt 110 peut comprendre un système de réchauffage, de préférence blindé grâce à un tube en acier par exemple, afin d'éliminer par effet Joule l'accrétion de givre.

Il peut être enclenché dès que le seuil de détection de givre est franchi par la fréquence du doigt 110.

Dans une configuration particulière, et en référence à la figure 7, le doigt 110 a la surface interne de son bord d'attaque 112 qui présente un profil dentelé 113.

Ainsi, on obtient une température de surface Tp du doigt 110 encore plus faible que sa température d'équilibre.

En effet, le profil dentelé 113 de la surface interne du bord d'attaque 112 augmente la surface d'échange thermique entre l'air et le doigt 110, la température de la paroi exposée à l'écoulement d'air externe 300 est donc diminuée grâce au transfert thermique à travers la paroi 112, créé par le flux interne et les dents 113 de la paroi.

La dimension et la forme des dents 113 sont adaptées pour obtenir un compromis optimisé entre la surface d'échange et la dimension du canal 116 dans le doigt 110.

Optionnellement, le canal 116 est rétréci en section (par exemple en plaçant une paroi 118 fermant l'accès à une partie du canal 116 initial au flux d'air), permettant ainsi de forcer la ventilation de la paroi interne de la partie exposée au flux et d'augmenter la vitesse de l'air. Ainsi, le coefficient d'échange thermique de la paroi avec l'air peut être augmenté.

Selon le concept choisi pour le refroidissement du doigt 110, celui-ci peut être réversible afin de dégivrer le doigt 110 lorsque le seuil de détection est atteint. Il réchauffe donc au-dessus de 0°C la paroi du doigt et élimine le givre pour permettre à la fréquence du doigt 110 d'atteindre sa valeur en fonctionnement nominal, c'est-à-dire sans accrétion de givre.

On peut réaliser notamment cela si on utilise un dispositif à effet Peltier pour refroidir, le réchauffage étant réalisé en inversant le sens du courant continu alimentant le système.

Dans un autre cas, un système de réchauffage peut être distinct du système de refroidissement.

On pourra par exemple voir sur la figure 5 que le système de refroidissement constitué des ouvertures d'aération 117 et du canal 116 est distinct d'un système de chauffage central 111.

Un système de refroidissement du doigt réglable (effet Peltier par exemple) 110 peut présenter plusieurs avantages, dans le cadre de la détection de givre.

♦ Grâce à un asservissement utilisant la température du doigt 110 et la température représentative de la température totale de l'écoulement (grâce à la température du mât 120), on peut refroidir le doigt 110 en dessous de la température de la paroi du mât 120, en conservant toujours le même écart de température, par exemple le doigt 110 étant 4°C plus froid que le mât 120.

Les températures du mât 120 et du doigt 110 peuvent en particulier être mesurées, à l'erreur de récupération près, par des sondes de température disposées sur ou dans la paroi de chacun de ces deux éléments.

♦ Il peut régler la température du bord d'attaque du doigt à la température statique de l'air environnant ou OAT, celle-ci étant obtenue par l'intermédiaire d'un calculateur utilisant les informations de Mach et de température totale de l'écoulement.

♦ Le système de refroidissement peut stabiliser la température du doigt à une température constante légèrement en dessous de 0°C, ou même fixée à 0°C. Un tel système permettrait d'apporter une solution au besoin de détection du "Ludlam effect", le « Ludlam effect étant un phénomène qui intervient lorsque l'aéronef évolue dans un milieu dont l'OAT est proche de 0°C :certaines parties de l'aéronef, du fait de la perturbation du champ aérodynamique, ont alors des températures de surface pouvant être inférieures à la température critique de givrage . Dès lors une accrétion de givre peut alors avoir lieu sur ces parties.

Ces diverses fonctions ont toutes pour objectif l'amélioration de la capacité de détection de givre pour des OAT proches de la température de givrage (autour de 0°C).

Ces fonctions de refroidissement peuvent être pilotées par la partie électronique située dans ledit boîtier de l'ensemble de détection de givre 100.

Deuxième ensemble de détection de givre 100 selon l'invention

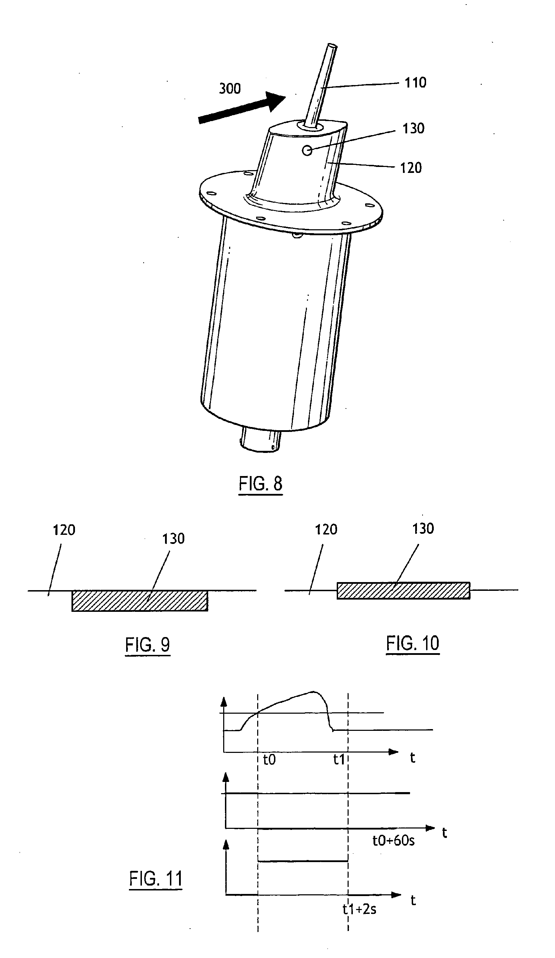

En référence à la figure 8, l'ensemble de détection 100 comprend en outre un dispositif à membrane vibrante 130 apte à mettre en vibration mécanique une membrane à partir d'une excitation électrique.

Le dispositif à membrane vibrante 130 est préférentiellement de forme circulaire.

Le dispositif à membrane vibrante 130 est affleurant à la paroi du mât 120, tel que représenté sur la figure 9, ou dépasse légèrement de la paroi, tel que représenté sur la figure 10.

Ce dispositif à membrane vibrante 130 s'adapte à la forme de la paroi sur laquelle il est positionné.

Le doigt 110 et la membrane du dispositif à membrane vibrante 130 sont respectivement excités mécaniquement par une céramique piézoélectrique commandée en tension, sur une plage fréquentielle contenant leur fréquence de résonance mécanique sensible à un dépôt de givre.

Une seconde céramique piézoélectrique génère une tension fonction de la fréquence de résonance du doigt 110 (information exploitée lors de la détection).

Pour le doigt 110, la fréquence de résonance exploitée est avantageusement située entre environ 20 et environ 30 kHz.

Pour la membrane du dispositif à membrane 130, il se situe avantageusement entre environ 1 kHz et environ 50 kHz.

Pour le doigt 110, comme déjà expliqué, le dépôt de givre correspond à une baisse de sa fréquence propre, la fréquence propre étant choisie pour être insensible à des poussières, à l'eau, à l'huile, etc...

Pour la membrane, le dépôt de givre provoque une hausse de la fréquence de résonance car la raideur k de la membrane est augmentée par ce dépôt de manière plus importante que sa masse m (ladite formule (1) étant également exploitable pour la membrane).

A l'inverse du doigt 110, le dépôt d'une autre matière comme l'eau, la poussière ou l'huile provoque la chute de la fréquence de vibration de la membrane car la masse m est augmentée. Il est alors possible de distinguer le dépôt de givre ou d'autres matières sur la membrane.

Un dégivrage des éléments sensibles et du mât 120 est avantageusement déclenché lors d'une détection de givre, au moment où le signal "Givre" est enclenché.

Dans le mât, ce dégivrage peut être réalisé au moyen de cartouches chauffantes insérées dans la paroi du mât 120 qui, du même coup, assurent par conduction le dégivrage de la membrane oscillante.

Une fois le givre évacué, le dégivrage est stoppé et au bout d'un temps déterminé, une nouvelle détection peut commencer.

Pour illustration et en référence à la figure 11, dans laquelle le premier graphe représente l'évolution dans le temps de la fréquence d'oscillation de la membrane entre deux dégivrages successifs, on voit qu'après un dégivrage, le givre s'accumule progressivement jusqu'à dépasser un seuil de détection au temps $t_0$ (correspondant au temps que met le système de dégivrage pour se refroidir, et au givre de se reformer).

En référence au troisième graphe de la figure 11, le dégivrage de la membrane 130 est alors mis en marche pour s'arrêter lorsque la quantité de givre est telle que la fréquence de la membrane 130 redescend en deçà du seuil de détection (au temps $t_1$). Avantageusement, le dégivrage s'arrête plus tard que t1, à un temps un temps $t_1 + \Delta t$ ($\Delta t$ étant ici égal à 2 secondes), la justification de ce $\Delta t$ étant de sécuriser le système en s'assurant que le doigt 110 est bien dégivré.

En référence au deuxième graphe de la figure 11, au temps $t_0$, un signal « givre détecté » est émis (son signal caractéristique étant envoyé vers la cabine de pilotage de l'aéronef pour avertir l'équipage et/ou vers des moyens de gestion). La durée du signal de détection de givre est constante. Dans le cas présenté ici, elle vaut 60 secondes, à partir du dépassement du seuil de fréquence. L'emplacement du dispositif à membrane 130 peut être multiple.

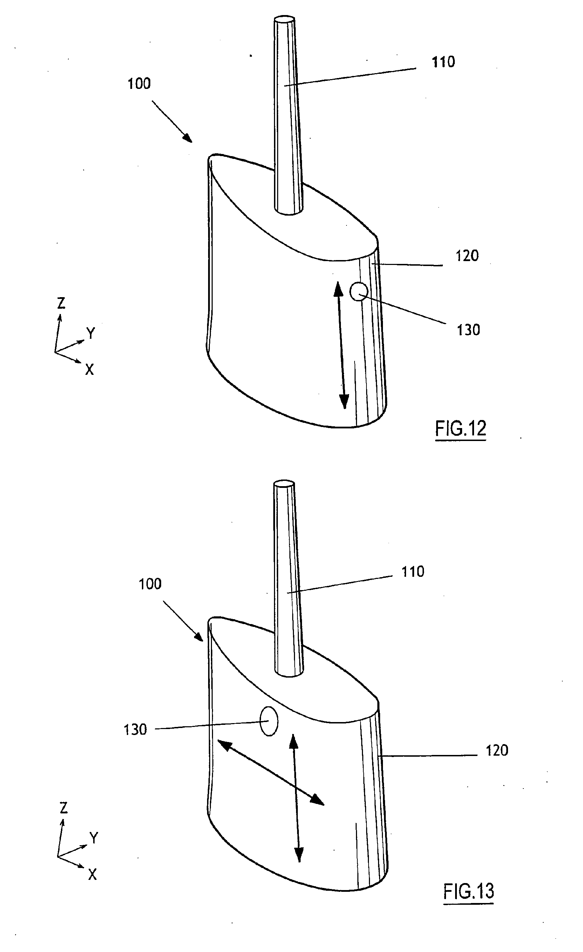

En référence à la figure 12, le dispositif de membrane 130 peut ainsi se situer sur le bord d'attaque du mât 120 par l'écoulement d'air, c'est à dire en face de l'arrivée d'air (sa position pouvant être déplacée le long de la double flèche noire). La membrane est ainsi directement exposée au flux d'air et aux particules de givre. Cette position permet alors d'avoir un coefficient de captation maximum et donc un temps de détection amélioré.

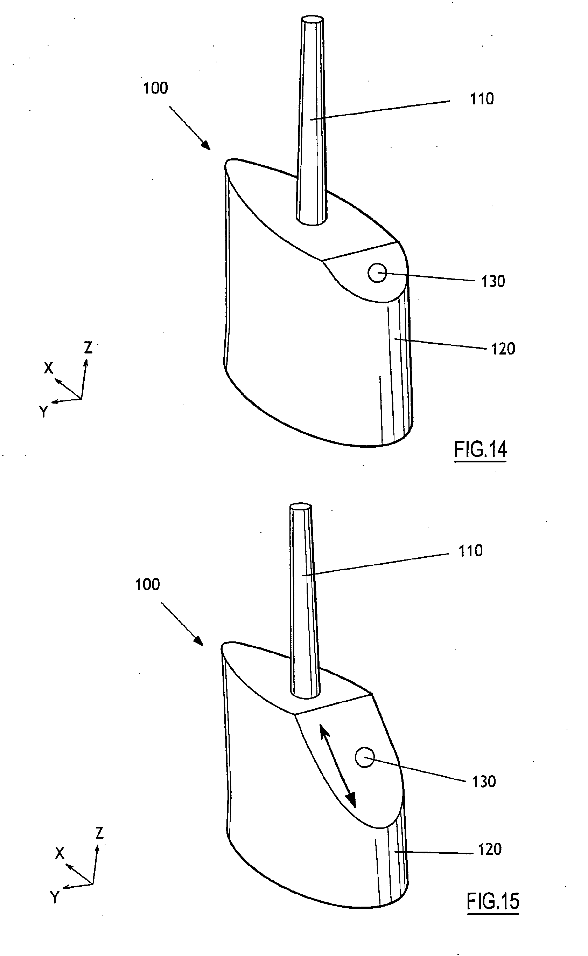

En référence à la figure 13, le dispositif à membrane 130 peut aussi être positionné sur un des flancs du mât 120, c'est à dire sur une surface adjacente à la surface faisant face à l'écoulement d'air. Cette position permet d'abaisser la température de la membrane sous la température totale de l'écoulement grâce au phénomène de récupération. C'est en effet dans cette position que, pour un profil type NACA, on obtient, du fait de la récupération, la température de paroi la plus faible du profil. Ainsi, pour une OAT proche de 0°C, la membrane placée sur le flanc du mât 120 permet la détection de givre, en accumulant du givre issu du ruissellement de l'eau sur le profil, avant l'accrétion sur un doigt vibrant 110 non refroidi.

La capacité de détection de la membrane est donc améliorée autour de 0°C par rapport à celle du doigt vibrant 110 non refroidi.

En référence aux figures 14 et 15, la surface du mât 120 directement exposée au vent peut être biseautée pour recevoir le dispositif à membrane 130 sur une surface pour laquelle on aura déterminé le type de conditions givrantes selon l'angle choisi du biseau par rapport à la surface d'attaque de l'air.

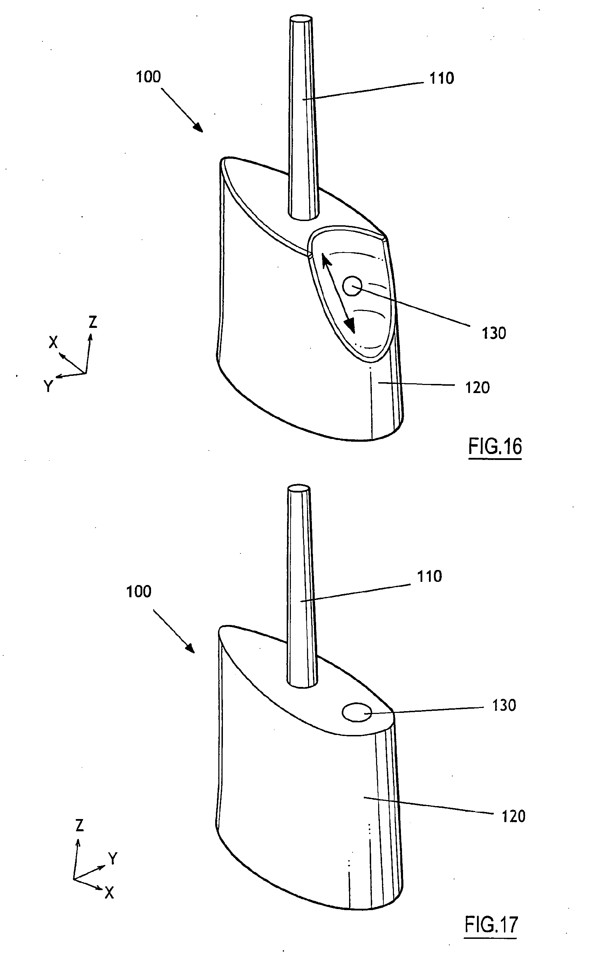

En variante, en référence à la figure 16, cette surface biseautée est en outre concave, formant une gouttière.

Les membranes situées sur ces surfaces biseautées, planes ou concaves, sont alors sensibles au dépôt de grosses gouttelettes de givre (MVD>100 µm), celles-ci ayant trop d'inertie pour être déviées et remonter vers le doigt 110. Ainsi, en présence de grosses gouttelettes, la membrane détectera le givre plus rapidement que le doigt 110.

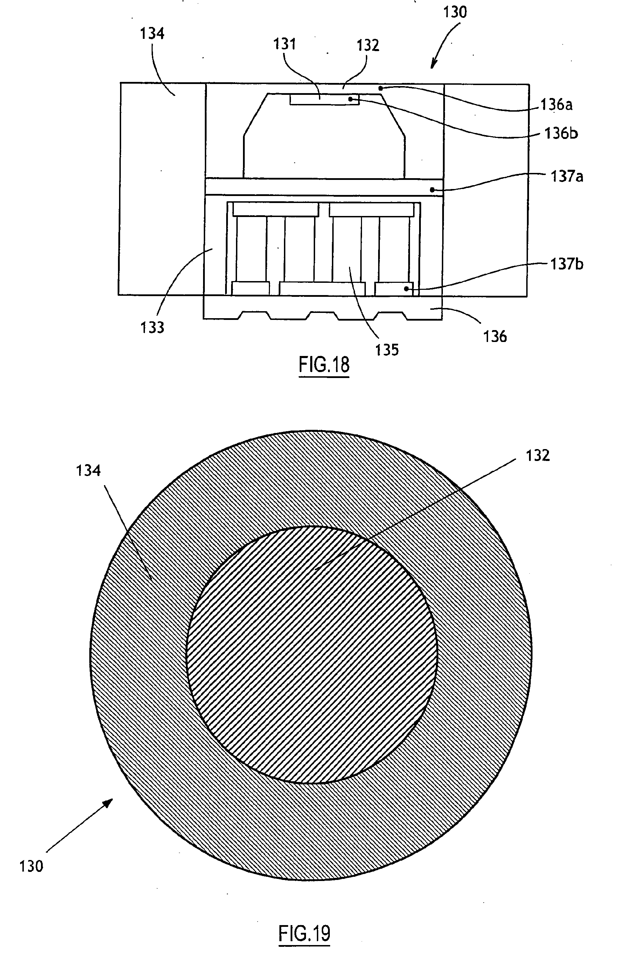

En référence à la figure 17, le dispositif à membrane 130 est situé sur le mât 120 au pied du doigt 110.

En référence aux figures 18 et 19, est représenté un exemple de dispositif à membrane 130 pouvant être utilisé dans le cadre de l'invention.

Celui-ci, similaire au dispositif 130 enseigné par le document US 4 570 881, comprend une membrane flexible 132 sur la surface interne de laquelle est fixée une cellule piézoélectrique 131. L'application d'une tension alternative à la cellule piézoélectrique 131 (au moyen d'un câble conducteur 136b, le retour se faisant via le câble 136a) met cette dernière en vibration, vibration alors transmise à la membrane 132. La membrane 132 est montée en suspension sur un plateau métallique 133 s'étendant sur un anneau isolant 134. La face interne de l'anneau isolant 134 est fermée par un radiateur 136. Des éléments Peltier 135, thermiquement connectés au radiateur 136 et au plateau métallique 133, sont disposés à l'intérieur de l'anneau isolant 134. La membrane 132 est elle aussi couplée thermiquement au plateau métallique 133. Les éléments Peltier 135 sont connectés à une source de courant continu (via les câbles 137a et 137b).

Le système de type Peltier 135, installé sous la membrane 132, permet ainsi de refroidir ou de réchauffer la membrane 132, au-dessous ou au-dessus de la température de l'air ambiant ou d'une température de référence, en inversant le sens du courant d'alimentation.

Cet ensemble de détection 100 peut inclure une sonde de température placée juste à côté du dispositif à membrane 130, mesurant une température représentative de la température de la membrane, et une sonde de température placée sur la paroi du mât 120 qui mesure une température représentative de la température totale ou statique de l'air ambiant et qui pourra servir de référence.

Une utilisation possible des deux sondes et du système Peltier est la régulation, grâce à un asservissement du système, de la température de la membrane à une température inférieure à la température de l'air ambiant ou de référence (par exemple inférieure de 2°C).

Une autre utilisation possible est la régulation de la température de la membrane à une température constante, inférieure à 0°C, assurant ainsi potentiellement la détection lors du "Ludlam effect" décrit plus haut.

La mesure de la température de l'air ambiant permet aussi d'introduire des gammes de température pour lesquelles l'utilisation du doigt 110 ou de la membrane 132 est la plus intéressante pour la performance de détection.

Ainsi, par exemple, pour des températures totales supérieures à -5°C par exemple, l'utilisation de la membrane 132 refroidie pourrait être plus judicieuse car plus sensible au dépôt de givre à ces températures proches de 0°C. Dans ce cas, l'information "Givre détecté" pourrait provenir de la membrane 132 et non du doigt 110.

En revanche, pour des températures totales inférieures à -5°C, l'utilisation du doigt 110 permettrait notamment d'améliorer le temps de réponse pour l'information "Givre détecté", ainsi que la fiabilité des mesures. Le doigt 110 serait alors utilisé pour la détection de givre.

A cet effet, un système de contrôle pourrait alors être prévu dans le boîtier pour décider quelles informations provenant de l'un ou l'autre détecteur (i.e. le doigt 110 ou la membrane 132) seront traitées en priorité par des moyens de traitement, selon les données reçues des différents capteurs de températures.

On pourrait ainsi tirer avantage de l'un ou l'autre détecteur de givre.

Troisième ensemble de détection de givre 100 selon l'invention

Cet ensemble de détection est une hybridation des deux premiers ensembles de détection, c'est à dire qu'il comprend un doigt 110 refroidi décrit dans le premier ensemble de détection de givre et un dispositif à membrane vibrante 130 refroidie décrit dans le second ensemble de détection de givre.

Avantageusement, le doigt 110 et le dispositif à membrane 130 comportent chacun un système de dégivrage tel que déjà défini plus haut.

**Revendications**

1. Ensemble de détection de givre (100) destiné à être monté sur aéronef, comprenant un doigt vibrant (110) et un mât (120), le doigt vibrant (110) s'étendant dans l'air à partir du mât (120) et étant apte à être mis en vibration par des moyens de mise en vibration à une fréquence de résonance sensible à un dépôt de givre sur sa surface, **caractérisé en ce qu'**il comprend un système de refroidissement apte à refroidir au moins une partie de l'ensemble de détection (100).

2. Ensemble de détection de givre (100) selon la revendication 1, **caractérisé en ce que** le doigt (110) inclut au moins une partie dudit système de refroidissement.

3. Ensemble de détection de givre (100) selon la revendication 2, **caractérisé en ce que** le doigt (110) comporte au moins deux ouvertures (17,19) reliées par au moins un canal traversant (16) de sorte à y créer localement un écoulement d'air permettant d'abaisser la température de la surface du doigt (110), constituant ainsi au moins en partie ledit système de refroidissement.

4. Ensemble de détection de givre (100) selon l'une des revendications précédentes, **caractérisé en ce qu'**il comprend en outre un dispositif à membrane flexible (130) monté sur le mât (120), la membrane vibrante (132) étant apte à être mise en vibration par des moyens de mise en vibration (131) à une fréquence de résonance sensible à un dépôt de givre sur sa surface et étant refroidie par au moins une partie dudit système de refroidissement.

5. Ensemble de détection de givre selon la revendication précédente, **caractérisé en ce que** le dispositif à membrane (130) est situé sur une surface d'attaque du mât (120), c'est à dire une surface du mât (120) qui fait face au flux d'air.

6. Ensemble de détection de givre selon la revendication précédente, **caractérisé en ce que** la surface d'attaque du mât (120) est biseautée, la surface du biseau ayant un angle déterminé avec la direction du flux d'air.

7. Ensemble de détection de givre selon la revendication précédente, **caractérisé en ce que** ladite surface du biseau est concave.

8. Ensemble de détection de givre selon la revendication 4, **caractérisé en ce que** le dispositif à membrane (130) est situé sur un flanc du mât (120), c'est à dire sur une surface latérale par rapport à une surface du mât (120) faisant face au flux d'air.

9. Ensemble de détection de givre (100) selon l'une des revendications précédentes, **caractérisé en ce que** le système de refroidissement comprend un système de pompe à chaleur compression/détente.

10. Ensemble de détection de givre (100) selon l'une des revendications précédentes, **caractérisé en ce que** le système de refroidissement comprend un système à effet Peltier.

11. Ensemble de détection (100) selon la revendication 2 **caractérisé en ce qu'**il comprend un capteur de température destiné à mesurer la température du doigt (110).

**12.** Ensemble de détection (100) selon la revendication 4, **caractérisé en ce qu'**il comprend un capteur de température apte à mesurer une température représentative de la température de la membrane (132).

**13.** Ensemble de détection (100) selon l'une des revendications précédentes, **caractérisé en ce qu'**il comporte au moins un capteur de température apte à mesurer une température représentative de la température totale ou statique de l'air environnant, relié à des moyens de contrôle du refroidissement.

**14.** Ensemble de détection selon l'une des revendications 11 à 13, **caractérisé en ce qu'**il comprend au moins un capteur de température apte à mesurer une température représentative de la température totale ou statique de l'air environnant, relié à des moyens pour contrôler qui de la membrane (132) ou du doigt (110) fournira les données de détection de givre à des moyens de traitement, selon les données de température fournies par au moins le capteur de température.

**15.** Ensemble de détection selon la revendication précédente, **caractérisé en ce que**, pour une température mesurée par au moins le capteur inférieure à environ -5°C, ce sont les données provenant du doigt (110) qui sont fournies aux moyens de traitement, et au-dessus de -5°C, ce sont les données provenant de la membrane (132) qui sont fournies aux moyens de traitement.

**16.** Ensemble de détection de givre selon l'une des revendications précédentes, **caractérisé en ce qu'**il comprend en outre un système de dégivrage.

**17.** Ensemble de détection de givre selon la revendication précédente, **caractérisé en ce que** le dégivrage du système de dégivrage et le refroidissement du système de refroidissement sont mis en oeuvre par un même dispositif.

FIG. 1

FIG. 2

300

119
110
116
117

120

FIG.3

300

119
110
116
117

120

FIG.4

FIG.5

FIG.6

FIG.7

FIG. 8

FIG. 9

FIG. 10

FIG. 11

FIG.12

FIG.13

FIG.14

FIG.15

17

FIG.16

FIG.17

FIG.18

FIG.19

**Office européen
des brevets**

**RAPPORT DE RECHERCHE EUROPEENNE**

Numéro de la demande

EP 04 29 2717

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | US 3 341 835 A (WERNER FRANK D ET AL) 12 septembre 1967 (1967-09-12) * colonne 1, ligne 66 - ligne 72 * * colonne 2, ligne 64 - dernière ligne * * colonne 7, ligne 14 - ligne 21 * * colonne 8, ligne 6 - ligne 24 * * figure 1 * | 1-8, 10-17 | B64D15/20 |
| | ----- | | |
| Y,D | US 4 570 881 A (LUSTENBERGER MARTIN) 18 février 1986 (1986-02-18) * colonne 2, ligne 28 - ligne 31 * * colonne 2, ligne 45 - ligne 50 * * colonne 3, ligne 40 - ligne 54 * * figure 1 * | 1-8, 10-17 | |
| | ----- | | |
| A | US 3 541 540 A (HUGHES JOHN FRANCIS) 17 novembre 1970 (1970-11-17) * colonne 2, ligne 65 - colonne 3, ligne 2 * * composé 1 3 4 * | 1,6,7 | |
| | ----- | | |

**DOMAINES TECHNIQUES RECHERCHES (Int.Cl.7)**

B64D

Le présent rapport a été établi pour toutes les revendications

| Lieu de la recherche | Date d'achèvement de la recherche | Examinateur |
|---|---|---|
| La Haye | 18 mars 2005 | Estrela y Calpe, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 29 2717

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-03-2005

| Document brevet cité au rapport de recherche | | Date de publication | Membre(s) de la famille de brevet(s) | | Date de publication |
|---|---|---|---|---|---|
| US 3341835 | A | 12-09-1967 | DE | 1573295 A1 | 09-04-1970 |
|  |  |  | GB | 1087475 A | 18-10-1967 |
| US 4570881 | A | 18-02-1986 | CA | 1250926 A1 | 07-03-1989 |
|  |  |  | CH | 656015 A5 | 30-05-1986 |
|  |  |  | EP | 0229858 A1 | 29-07-1987 |
|  |  |  | JP | 1845470 C | 25-05-1994 |
|  |  |  | JP | 5056831 B | 20-08-1993 |
|  |  |  | JP | 62132148 A | 15-06-1987 |
|  |  |  | SU | 1521294 A3 | 07-11-1989 |
|  |  |  | AT | 43731 T | 15-06-1989 |
|  |  |  | DE | 3570777 D1 | 06-07-1989 |
| US 3541540 | A | 17-11-1970 | AUCUN | | |

EPO FORM P0460

Pour tout renseignement concernant cette annexe : voir Journal Officiel de l'Office européen des brevets, No.12/82